# EUROPEAN PATENT APPLICATION

(11) **EP 1 517 062 A2**
(43) Date of publication of application: **23.03.2005**
(21) Application number: 04255582.1
(22) Date of filing: 15.09.2004
(51) Int. Cl.: F16D 69/02

(54) **High coefficient friction material with symmetrical friction modifying particles**

(30) Priority: 19.09.2003 US 666090
(71) Applicant: BorgWarner Inc., Auburn Hills, Michigan 48326 (US)
(72) Inventor: Lam, Robert C., Rochester, Michigan 48306 (US); Chen, Yih-Fang, Lisle, Illinois 60532 (US); Dong, Feng, Rochester, Michigan 48306 (US); Chavdar, Bulent, Rochester, Michigan 48307 (US)
(74) Representative: Hedges, Martin Nicholas

(57) **Abstract**

The present invention relates to a friction material comprising a primary layer material layer and at least a partial coating of symmetrically shaped friction modifying particles on at least one surface of the primary layer for use as an anti-shudder friction material.

## Description

The present invention relates to a non-asbestos, non-metallic material comprising a first layer of a base material and a second layer of friction modifying particles that at least partially coat the base material. The friction modifying particles have symmetrical geometric shapes. The invention further relates to a composite friction material comprising the above described coated material impregnated with a suitable resin material.

The friction material of the present invention has improved anti-shudder characteristics, high coefficients of friction, and improved strength, porosity, wear resistance and noise resistance.

### BACKGROUND ART

New and advanced transmission systems and braking systems are being developed by the automotive industry. These new systems often involve high energy requirements. Therefore, the friction materials technology must be also developed to meet the increasing energy requirements of these advanced systems.

In particular, a new high performance, durable friction material is needed. The new friction material must be able to withstand high speeds wherein surface speeds are up to about 65m/seconds. Also, the friction material must be able to withstand high facing lining pressures up to about 1500 psi. It is also important that the friction material be useful under limited lubrication conditions.

The friction material must be durable and have high heat resistance in order to be useful in the advanced transmission and braking systems. Not only must the friction material remain stable at high temperatures, it must also be able to rapidly dissipate the high heat that is being generated during operating conditions.

The high speeds generated during engagement and disengagement of the new transmission and braking systems mean that a friction material must be able to maintain a relatively constant friction throughout the engagement. It is important that the frictional engagement be relatively constant over a wide range of speeds and temperatures in order to minimize "shuddering" of materials during braking or the transmission system during power shift from one gear to another. It is also important that the friction material have a desired torque curve shape so that during frictional engagement the friction material is noise or "squawk" free.

In particular, transmission and torque-on-demand systems incorporate slipping clutches mainly for the fuel efficiency and driving comfort. The role of the slip clutch within these systems varies from vehicle launching devices, such as wet start clutches, to that of a torque converter clutches. According to the operating conditions, the slip clutch can be differentiated into three principle classes: (1) Low Pressure and High Slip Speed Clutch, such as wet start clutch; (2) High Pressure and Low Slip Speed Clutch, such as Converter Clutch; and (3) Extreme Low Pressure and Low Slip Speed Clutch, such as neutral to idle clutch.

The principal performance concerns for all applications of the slip clutch are the prevention of shudder and the energy management of the friction interface. The occurrence of shudder can be attributed to many factors including the friction characteristics of the friction material, the mating surface's hardness and roughness, oil film retention, lubricant chemistry and interactions, clutch operating conditions, driveline assembly and hardware alignment, and driveline contamination. The friction interface energy management is primarily concerned with controlling interface temperature and is affected by the pump capacity, oil flow path and control strategy. The friction material surface design also contributes to the efficiency of interface energy management.

Previously, asbestos fibers were included in the friction material for temperature stability. Due to health and environmental problems, asbestos is no longer being used. More recent friction materials have attempted to overcome the absence of the asbestos in the friction material by modifying impregnating paper or fiber materials with phenolic or phenolic-modified resins. These friction materials, however, do not rapidly dissipate the high heat generated, and do not have the necessary heat resistance and satisfactory high coefficient of friction performance now needed for use in the high speed systems currently being developed.

The present invention is an improvement over the Winckler U.S. Patent No. 4,700,823 which describes a friction material comprising a mesh of cloth substrate formed of carbon fibers and a coating of carbon deposited on the fibbers by chemical vapor deposition.

The present invention is also an improvement over the Winckler U.S. Patent No. 5,662,993 which describes a friction material comprising fibers formed into strands that are woven or braided together into a fabric. The strands have a binder wicked along each of the fibers such that gaps are left between fibers.

The present invention is also an improvement over the Gibson et al. U.S. Patent No. 5,952,249 which describes an amorphous carbon-coated carbon fabric where the amorphous carbon fills gaps between individual fibers of the yarn comprising the fabric.

Various other types of friction materials are made of a paper material. For example, the Kersey, U.S. Patent No. 5,585,166 describes a two layer friction material having a porous substrate and a porous friction layer.

The Seitz U.S. Patent No. 5,083,650 reference involves a multi-step impregnating and curing process for making a paper impregnated with a coating composition.

In other friction materials, metallic fibers combined with carbon materials were included in the friction material for wear resistance. For example, Fujimaki et al. U.S. Patent No. 4,451,590 describes a friction material having metallic fibers, filler, carbon particles, carbon fibers and phenolic resin.

Various other friction materials currently in use are include many types of "paper based" friction materials. These ''paper based" friction materials generally include a fibrous base material that is typically made of random, non-woven fibrous materials along with at least one type of suitable filler material. For example, various useful friction materials have been developed that are co-owned by the assignee herein, BorgWamer Inc.

In particular, Lam et al., U.S. Patent No. 5,998,307 relates to a friction material having a porous primary layer and a secondary layer of carbon particles covering at least about 3 to about 90% of the surface of the primary layer.

The Lam et al., U.S. Patent No. 5,858,883 relates to a base material having a primary layer of less fibrillated aramid fibers, synthetic graphite, and a filler, and a secondary layer comprising carbon particles on the surface of the primary layer.

The Lam et al., U.S. Patent No. 5,856,244 relates to a friction material comprising a base impregnated with a curable resin. The primary layer comprises less fibrillated aramid fibers, synthetic graphite and filler; the secondary layer comprises carbon particles and a retention aid.

The Lam et al. U.S. Patent No. 5,958,507 relates to a process for producing a friction material where at least one surface of the fibrous material, which comprises less fibrillated aramid fibers, is coated with carbon particles and a retention aid such that at least 3 to 90% of the surface is coated, impregnating the coated fibrous material with a phenolic or modified phenolic resin, and curing.

The Lam, U.S. Patent No. 6,001,750 relates to a friction material comprising a fibrous base material impregnated with a curable resin. The porous primarily layer comprises less fibrillated aramid fibers, carbon particles, carbon fibers, filler material, phenolic novoloid fibers, and optionally, cotton fibers. The secondary layer comprises carbon particles which cover the surface at about 3 to about 90% of the surface.

In addition, various paper type fibrous base materials are described in commonly owned BorgWamer Inc. Lam et al., U.S. Patent Nos. 5,753,356 and 5,707,905 which describe base materials comprising less fibrillated aramid fibers, synthetic graphite and filler.

Another commonly owned patent, the Lam, U.S. Patent No. 6,130,176, relates to non-metallic paper type fibrous base materials comprising less fibrillated aramid fibers, carbon fibers, carbon particles and filler.

Yet another commonly owned patent application, Serial No. 09/707,274, now allowed, relates to a friction material having a porous primary fibrous base layer and a secondary layer of silica friction modifying particles on the primary layer.

Yet another commonly owned patent application, Serial No. 10/234,976 filed September 4, 2002, relates to a friction material comprising a first layer having a base material and at least one type of resin material. A second layer comprising at least one type of friction modifying particles that have a substantially symmetrical geometric shape is deposited on a top surface of the base material. The second layer has an average thickness of about 30 to about 200 microns, such that the top layer has a fluid permeability lower than the first layer.

For all types of friction materials, in order to be useful in "wet" applications, the friction material must have a wide variety of acceptable characteristics. The friction material must have good anti-shudder characteristics; be resilient or elastic yet resistant to compression set, abrasion and stress; have high heat resistance and be able to dissipate heat quickly; and, have long lasting, stable and consistent frictional performance. If any of these characteristics are not met, optimum performance of the friction material is not achieved.

It is also important that a suitable impregnating resin be used in the friction material in order to form a high energy application friction material. The friction material must have good shear strength both when saturated with the wet resin during impregnation and when saturated with brake fluid or transmission oil during use.

It is also important, under certain applications, that the friction material have high porosity such that there is a high fluid permeation capacity during use. Thus, it is important that the friction material not only be porous, it must also be compressible. The fluids permeated into the friction material must be capable of being squeezed or released from the friction material quickly under the pressures applied during operation of the brake or transmission, yet the friction material must not collapse. It is also important that the friction material have high thermal conductivity to also help rapidly dissipate the heat generated during operation of the brake or transmission.

As far as is known, there is no disclosure of friction material for use in transmission systems which includes a base material comprising such primary layer having deposited thereon a secondary layer of geometrically symmetrical friction modifying particles.

Accordingly, it is an object of the present invention to provide an improved friction material with reliable and improved properties compared to those of the prior art.

A further object of this invention is to provide friction materials with improved "anti-shudder", "hot spot" resistance, high heat resistance, high friction stability and durability, porosity, strength, and elasticity.

As a result of extensive research in view of the need for a better friction material, a friction material with improved characteristics has been developed by the invention. The present wet friction material is useful in "wet" applications where the friction material is "wetted" or impregnated with a liquid such as brake fluid or automatic transmission fluid during use. During use of the "wet" friction material, the fluid is ultimately squeezed from or is impregnating the friction material. Wet friction materials differ greatly, both in their compositions and physical characteristics from "dry" friction materials.

### DISCLOSURE OF THE INVENTION

In order to achieve the requirements discussed above, many materials were evaluated for friction and heat resistant characteristics under conditions similar to those encountered during operation. Both commercially available slip clutches, and transmission materials were investigated and proved not to be suitable for use in high energy applications.

In one aspect, the present invention relates to a friction material having a base material impregnated with at least one curable resin. The base material has a porous primary layer comprising a fibrous base material, and a secondary layer comprising geometrically symmetrically shaped friction modifying particles at least partially covering an outer surface of the material. The primary layer holds the geometrically symmetrically shaped friction modifying particles on the surface of the primary material layer. The friction modifying particles can comprise symmetrically shaped silica particles such as shaped celite particles. In other embodiments, the friction modifying particles can comprise a mixture of carbon particles and symmetrically shaped silica particles, and/or the friction modifying particles can be present at about 0.2 to about 80%, by weight, based on the weight of the primary layer material.

In certain embodiments, the primary layer material has a surface smoothness in the range of 0.02 mm Ra to about 0.2 mm which smooth surface provides the friction material with consistent anti-shudder and coefficient of friction characteristics.

In one embodiment, the present invention relates to a non-asbestos, non-metallic friction material having a primary layer comprising a fiber material including, for example, organic fibers such as fibrillated aramid fibers (and optionally carbon, cotton/cellulose, glass, polyamid, ceramic, and the like fibers), and ii) a secondary layer comprising friction modifying particles deposited on the primary layer. The surface, or secondary, layer can be comprised of one type of friction modifying particle, or alternatively, can be comprised of a combination of several types of friction modifying particles.

Various friction modifying particles are useful as the secondary layer. The friction modifying particles have at least one type of substantially symmetrical geometric shape. In certain embodiments, the second layer has an average thickness of about 0 to about 200 microns. In certain preferred embodiments, the friction modifying particles have a generally flat or disc shape. In certain embodiments, the surface friction modifying particles are present at about 0.2 to about 50%, by weight, and preferably about 1-40%, by weight, and most preferably about 2-30%, by weight, of the coated material.

The friction material of the present invention has improved anti-shudder characteristics, improved "hot spot" resistance, desirable friction characteristics for "smooth shifts", high heat resistance, durability, elasticity, improved strength and porosity.

The invention further relates to a composite friction material comprising the above described coated material impregnated with a phenolic resin or a phenolic based resin blend.

The coated material can be impregnated using different resin systems. In certain embodiments, it is useful to impregnate the coated material with a phenolic resin or a modified phenolic-based resin. In certain embodiments, when a silicone resin is blended or mixed with a phenolic resin in compatible solvents and that silicone-phenolic resin blend is used to impregnate the coated material of the present invention, an especially useful high performance, durable friction material is formed.

### BRIEF DESCRIPTION OF DRAWINGS

Fig 1a is a schematic illustration of a porous woven material having a layer of symmetrical shaped friction modifying material at least partially covering the surface of the porous woven material.
Fig 1b is a schematic illustration of a porous woven material having a layer of symmetrical shaped friction modifying material fully covering the surface of the porous woven material.
Fig 2a is a scanning electron microphotograph showing an uncoated porous woven material.
Fig 2b is a scanning electron microphotograph showing a porous woven material partially coated with symmetrically shaped friction modifying particles.
Fig 2c is a scanning electron microphotograph showing a porous woven material partially coated with symmetrically shaped friction modifying particles.
Fig 2d is a scanning electron microphotograph showing a porous woven material coated with symmetrically shaped friction modifying particles.
Fig 3a is a photograph showing Example 1, a porous woven material coated with symmetrically shaped friction modifying particles and saturated with about 36% resin pick up.
Fig 3b is a photograph showing Example 2, a porous woven material coated with a mixture of symmetrically shaped friction modifying particles and irregularly shaped friction modifying particles and saturated with about 36% resin pick up.
Fig. 4 is a graph showing pore size and porosity data for a Comparative example A a with 33% resin pick up, a Comparative example B with a 50 % resin pick up, Example 1 with full coverage with symmetrical shaped friction modifying particles, and a Comparative example C, a woven fabric.
Fig. 5 a is a graph showing the µ- slip speed for Comparative material A at 10 °C, first run with a resin saturation of 36% pick up.
Fig. 5b is a graph showing the µ- slip speed for Comparative material A at 20 °C, first run with a resin saturation of 36% pick up.
Fig. 6a is a graph showing the µ- slip speed for Example 3, having a coating of a mixture of symmetrical shaped friction modifying particles and irregularly shaped friction modifying particles on a woven material at 10 °C, first run with a resin saturation of 36% pick up.
Fig. 6b is a graph showing the µ- slip speed for Example 3, having a coating of a mixture of symmetrical shaped friction modifying particles and irregularly shaped friction modifying particles on a woven material at 30 °C, first run with a resin saturation of 36% pick up.
Fig. 7a is a graph showing the µ- slip speed for Comparative material A at 110 °C, first run with a resin saturation of 36% pick up.
Fig. 7b is a graph showing the µ- slip speed for Example 3, having a full coating of a mixture of symmetrical shaped friction modifying particles and irregularly shaped friction modifying particles on a woven material at 110 °C, first run with a resin saturation of 36% pick up.
Fig. 8a is a graph showing the µ- slip speed for: solid lines -Comparative material A mat 10 °C, first run with a resin saturation of 36% pick up; dotted lines - Example 2 having a partial coating of a mixture of symmetrical shaped friction modifying particles and irregularly shaped friction modifying particles on a woven material at 10 °C, first run with a resin saturation of 36% pick up.
Fig. 8b is a graph showing the µ- slip speed for Example 2 having a partial coating of a mixture of symmetrical shaped friction modifying particles and irregularly shaped friction modifying particles on a woven material at 10 °C, first run with a resin saturation of 36% pick up. using HPT: Hot plate treatment - a process in which the friction material surface is in contact with pre-heated metal plate (about 850 °F) for pre-set period of time
Fig. 9a is a graph showing the µ- slip speed for: solid lines - Comparative material A at 30 °C, first run with a resin saturation of 36% pick up; dotted lines - Example 1 having a partial coating of a mixture of symmetrical shaped friction modifying particles and irregularly shaped friction modifying particles on a woven material at 30 °C, first run with a resin saturation of 36% pick up.
Fig. 9b is a graph showing the µ- slip speed for Example 2 having a partial coating of a mixture of symmetrical shaped friction modifying particles and irregularly shaped friction modifying particles on a woven material at 30 °C, first run with a resin saturation of 36% pick up.
Fig. 10a is a graph showing the µ- slip speed for: solid lines - Comparative material A at 110 °C, first run with a resin saturation of 36% pick up; dotted lines - Example 2 having a partial coating of a mixture of symmetrical shaped friction modifying particles and irregularly shaped friction modifying particles on a woven material at 110 °C, first run with a resin saturation of 36% pick up.
Fig. 10b is a graph showing the µ- slip speed for Example 2 having a partial coating of a mixture of symmetrical shaped friction modifying particles and irregularly shaped friction modifying particles on a woven material at 110 °C, first run with a resin saturation of 36% pick up.
Figs. 11a and 11b are illustrations of the surface roughness of Example 1 with a full coverage of symmetrically shaped friction modifying particles.
Figs. 12a and 12b are illustrations of the surface roughness of Example 1 with partial coverage of symmetrically shaped friction modifying particles.

### BEST MODE OF CARRYING OUT THE INVENTION

In order to achieve the requirements discussed above, many materials were evaluated for friction and heat resistant characteristics under conditions similar to those encountered during operation. Both commercially available brake linings and transmission materials were investigated and proved not to be suitable for use in high-energy applications.

The present invention relates to a non-asbestos, friction material comprising a primary layer of a base material and a secondary layer comprising geometrically symmetrical shaped friction modifying particles deposited on the primary layer.

Various base materials are useful in the friction material of the present invention, including, for example, non-asbestos base materials comprising, for example, fabric materials, woven and/or nonwoven materials. Suitable base materials include, for example, fibers and fillers. The fibers can be organic fibers, inorganic fibers and carbon fibers. The organic fibers can be aramid fibers, such as fibrillated and/or nonfibrillated aramid fibers, acrylic fibers, polyester fibers, nylon fibers, polyamide fibers, cotton/cellulose fibers and the like. The carbon fibers can comprise, for example, about 95% carbonized carbon fibers the fillers can be, for example, silica, diatomaceous earth, graphite, alumina, cashew dust and the like.

In other embodiments, the base material can comprise woven materials, non-woven materials, and paper materials. Further, examples of the various types of base materials useful in the present invention are disclosed in the above-referenced BorgWamer U.S. patents which are fully incorporated herein by reference. It should be understood however, that other embodiments of the present invention can include yet different base materials.

In certain embodiments, the friction material comprises a base material which has a plurality of voids or interstices therein. The size of the voids in the base material can range from about 0.5 µm to about 20 µm.

In certain embodiments, the base material preferably has a void volume of about 50 to about 60% such that the base material is considered "dense" as compared to a "porous" woven material. In certain embodiments, the base material can be any suitable material such as a fibrous base material. The friction material further comprises a resin material which at least partially fills the voids in the base material. The resin material is substantially uniformly dispersed throughout the thickness of the base material.

In certain embodiments, the base material comprises a fibrous base material where less fibrillated fibers and carbon fibers are used in the fibrous base material to provide a desirable pore structure to the friction material. The fiber geometry not only provides increased thermal resistance, but also provides delamination resistance and squeal or noise resistance. Also, in certain embodiments, the presence of the carbon fibers and carbon particles aids in the fibrous base material in increasing the thermal resistance, maintaining a steady coefficient of friction and increasing the squeal resistance. A relatively low amount of cotton fibers in the fibrous base material can be included to improve the friction material's clutch "break-in" characteristics.

The use of less fibrillated aramid fibers and carbon fibers in a fibrous base material improves the friction material's ability to withstand high temperatures. Less fibrillated aramid fibers generally have few fibrils attached to a core fiber. The use of the less fibrillated aramid fibers provides a friction material having a more porous structure; i.e., there are larger pores than if a typical fibrillated aramid fiber is used. The porous structure is generally defined by the pore size and liquid permeability. In certain embodiments, the fibrous base material defines pores ranging in mean average size from about 2.0 to about 25 microns in diameter. In certain embodiments, the mean pore size ranges from about 2.5 to about 8 microns in diameter and the friction material had readily available air voids of at least about 50% and, in certain embodiments, at least about 60% or higher, an in certain embodiments up to and including about 85%.

Also, in certain embodiments, it is desired that the aramid fibers have a length ranging from about 0.5 to about 10 mm and a Canadian Standard Freeness (CSF) of greater than about 300. In certain embodiments, it is also desired to use less fibrillated aramid fibers which have a CSF of about 450 to about 550 preferably about 530 and greater; and, in other certain embodiments, about 580-650 and above and preferably about 650 and above. In contrast, more fibrillated fibers, such as aramid pulp, have a freeness of about 285-290.

The "Canadian Standard Freeness" (T227 om-85) means that the degree of fibrillation of fibers can be described as the measurement of freeness of the fibers. The CSF test is an empirical procedure which gives an arbitrary measure of the rate at which a suspension of three grams of fibers in one liter of water may be drained. Therefore, the less fibrillated aramid fibers have higher freeness or higher rate of drainage of fluid from the friction material than more fibrillated aramid fibers. Friction materials comprising the aramid fibers having a CSF ranging from about 430-650 (and in certain embodiments preferably about 580-640, or preferably about 620-640), provide superior friction performance and have better material properties than friction materials containing conventionally more fibrillated aramid fibers. The longer fiber length, together with the high Canadian freeness, provides a friction material with high strength, high porosity and good wear resistance. The less fibrillated aramid fibers (CSF about 530-about 650) have especially good long-term durability and stable coefficients of friction.

Various fillers are also useful in the primary layer of the fibrous base material of the present invention. In particular, silica fillers, such as diatomaceous earth, are useful. However, it is contemplated that other types of fillers are suitable for use in the present invention and that the choice of filler depends on the particular requirements of the friction material.

In certain embodiments, cotton fiber is added to the fibrous base material of the present invention to give the fibrous material higher coefficients of friction. In certain embodiments, about 5 to about 20%, and, in certain embodiments, about 10% cotton can also be added to the fibrous base material.

One example of a formulation for the primary layer of a fibrous base material as described in the above incorporated by reference U.S. Patent No. 6,130,176, which comprises about 10 to about 50%, by weight, of a less fibrillated aramid fiber; about 10 to about 35%, by weight, of activated carbon particles; about 5 to about 20%, by weight, cotton fibers, about 2 to about 15%, by weight, carbon fibers; and, about 10 to about 35%, by weight of a filler material.

In certain other embodiments, one particular formulation has found to be useful comprises about 35 to about 45%, by weight, less fibrillated aramid fibers; about 10 to about 20%, by weight, activated carbon particles; about 5 to about 15% cotton fibers; about 2 to about 20%, by weight, carbon fibers; and, about 25 to about 35%, by weight, filler.

In certain embodiments, the base material comprises from about 15 to about 25% cotton, about 50% aramid fibers, about 20% carbon fibers, about 15% carbon particles, about 15% celite, and, optionally, about 3% latex addon.

In other embodiments, the base material comprises from about 15 to about 25% cotton, about 40 to about 50% aramid fibers, about 10 to about 20% carbon fibers, about 5 to about 15% carbon particles, about 5 to about 15% celite, and, optionally, about 3% latex addon.

When the base material has a higher mean pore diameter and fluid permeability, the friction material is more likely to run cooler or with less heat generated in a transmission due to better automatic transmission fluid flow throughout the porous structure of the friction material. During operation of a transmission system, the fluid tends, over time, to breakdown and form "oil deposits", especially at high temperatures. These "oil deposits" decrease the pore openings. Therefore, when the friction material initially starts with larger pores, there are more open pores remaining during the useful life of the friction material.

The use of friction modifying particles as a top on the primary layer of the base material provides a desired three-dimensional structure to the base material.

In one particular embodiment, the primary layer comprises woven carbon fibers which provide increased thermal resistance to the friction material. The carbon fibers not only provide increased thermal resistance, but also provide delamination resistance and squeal or noise resistance.

When the friction material has a higher mean flow pore diameter and permeability, the friction material is more likely to run cooler or with less heat generated in a transmission due to better automatic transmission fluid flow throughout the porous structure of the friction material. During operation of a transmission system, oil deposits on the surface of the friction material tend to develop over time due to a breakdown of the automatic transmission fluid, especially at high temperatures. The oil deposits on the fibers decrease the pore openings. Therefore, when the friction material initially starts with larger pores, there are more open pores remaining during the useful life of the friction material. In addition, in embodiments at least partially impregnated with a silicone resin, the silicone resin, due its elastic characteristics, allows the fibers in the friction material to have an even more open structure.

A secondary layer of the geometrically symmetrical shaped friction modifying particles is deposited on the primary layer to form the friction material. The use of geometrically symmetrical shaped friction modifying particles on the primary layer provides an improved three dimensional structure to the friction material.

In certain embodiments, it has been discovered that if the friction modifying particle size is too large or too small, the optimum three-dimensional structure not achieved and, consequently, the heat dissipation is not as optimum.

In preferred embodiments, the amount of friction modifying particles on the primary layer ranges from about 0.2 to about 40%, by weight, and in certain embodiments about 2 to about 25%, by weight, and in certain preferred embodiments about 2 to about 15%, by weight, of the friction material. In these certain embodiments, it has been discovered that if the geometrically symmetrical shaped friction modifying particle size is too large or too small, the optimum three-dimensional structure not achieved and, consequently, the heat dissipation is not as optimum.

In preferred embodiments, the area of coverage of friction modifying particles on the primary layer surface is in the range of about 3 to about 100% of the surface area.

Various friction modifying particles are useful as the secondary layer. Useful friction modifying particles include geometrically symmetrical shaped silica particles.

In one aspect of the present invention, the friction modifying materials having a regular geometry comprise round, flat disks of celite. When applied as a top layer to a base material, such round, flat disks of friction modifying particles provide a unique surface stacking pattern which improves oil retention and oil flow on the friction surface.

Also, in certain embodiments, the friction modifying particles have an average size from about 0.1 to about 80 microns, and in certain embodiments, have an average size from about 0.5 to about 20 microns, and in certain other embodiments, from about 0.1 to about 0.15 microns. friction modifying material layer holds the fluid lubricant on the surface and increases the oil retaining capacity of the friction material. The friction material of the present invention thus allows an oil film to remain on its surface. This provides good coefficient of friction characteristics and good slip durability characteristics.

The friction material further comprises a top, or second, layer of the regular geometrical shaped friction modifying particles on a first, or top, surface of the base material. The presence of the friction modifying materials as a top layer on the base material provides the friction material with many advantageous properties, including good oil retention and surface oil flow properties.

In still other embodiments, it is within the contemplates scope of the present invention that the regular geometrical shaped friction modifying particles can further include other friction modifying particles such as metal oxides, nitrides, carbides, and in further embodiments, a mixture of carbon particles and silica particles.

In certain embodiments, the useful friction modifying particles comprise a mixture of the geometrically symmetrically shaped friction modifying particles and at least one type of irregularly shaped friction modifying particles such as silica particles; resin powders such as phenolic resins, silicone resins epoxy resins and mixtures thereof; partial and/or fully carbonized carbon powders and/or particles admixtures thereof; and mixtures of such friction modifying particles. In particular, silica particles such as diatomaceous earth, Celite@, Celatom®, and/or silicon dioxide are especially useful. The silica particles are inexpensive organic materials which bond strongly to the fibrous materials. The silica particles provide high coefficients of friction to the friction material. The silica particles also provide the friction material with a smooth friction surface and provides a good "shift feel" and friction characteristics to the friction material such that any "shudder" is minimized.

In certain embodiments, the use of a mixture of friction modifying particles as a secondary layer on the primary layer provides high heat resistant and highly durable friction material.

It has surprisingly been found that a combination of geometrically symmetrical shaped silica particles and irregularly shaped friction modifying particles, when present in preferred ratios as a secondary layer, is particularly useful.

In one aspect of the invention, especially useful friction modifying particles include a desired mixture of silica particles and geometrically symmetrically shaped friction modifying particles. In certain embodiments, the secondary layer mixture comprises silica particles and geometrically symmetrically shaped friction modifying particles in a ratio of about 4 parts silica particles to about 1 part geometrically symmetrically shaped friction modifying particles. In other embodiments, the ratio is about 2 part silica particles to about 1 part geometrically symmetrically shaped friction modifying particles. The geometrically symmetrically shaped friction modifying particles, while being relatively expensive, provide especially beneficial hot spot resistance and high friction stability and durability to the friction material. The friction material of claim 1, wherein the friction modifying particles comprises about 6 to about 60%, by weight, of friction modifying particles, based on the weight of the friction material.

In certain embodiments, the friction modifying particles comprise about 45 to about 55%, by weight, of silica particles, and about 45 to about 55 % geometrically symmetrically shaped friction modifying particles, based on the total weight of the friction modifying particles.

In these certain embodiments, it has been discovered that if the friction modifying particle size is too large or too small, the optimum three-dimensional structure not achieved and, consequently, the heat dissipation is not as optimum.

Another aspect of the present invention relates to a process for producing the friction material which first comprises forming the primary layer material. The substantially symmetrical geometric shape, substantially symmetrical geometric shape, material preferably has a warp of about 40-50, and preferably about 44-46 yams/inch, and a fill of about 35-45, and preferably about 38-40 yams/inch. In certain embodiments, the woven material is woven or formed such that the warp and fill are relatively smooth or planar, with respect to each other. That is, the woven material, taking into consideration both the thickness of the strands and the weaving pattern itself, provides a relatively smooth friction material. In certain embodiments, the woven material has a surface smoothness of about 0.02 mm to about 0.2 mm Ra. The warp and fill define a plurality of indentations, or micropockets, which allow the friction modifying particles to be held on the surface of the woven material.

In one embodiment, at least one surface of the primary layer is at least partially coated with the secondary layer of the geometrically symmetrically shaped friction modifying particles. The material, with the geometrically symmetrically shaped friction modifying particles coated thereon, is then impregnated with at least one type of suitable resin. The impregnated, coated material is cured at a predetermined temperature for a predetermined period of time to form the friction material.

In another embodiment, the friction materials are made as follows: presaturate the material, then dry and cure the resin; then coat the fabric with a mixture of phenolic rein and particles.

In another embodiment, at least one surface of the primary layer is substantially fully coated with the secondary layer of the geometrically symmetrically shaped friction modifying particles. The primary layer material, with the geometrically symmetrically shaped friction modifying particles coated thereon, is then impregnated with at least one type of suitable resin. The impregnated, coated primary layer material is cured at a predetermined temperature for a predetermined period of time to form the friction material.

In yet another embodiment, at least one surface of the primary layer is at least partially coated with the secondary layer of a mixture of the geometrically symmetrically shaped friction modifying and irregularly shaped friction modifying particles. The primary layer material, with the mixture of friction modifying particles coated thereon, is then impregnated with at least one type of suitable resin. The impregnated, coated material is cured at a predetermined temperature for a predetermined period of time to form the friction material.

In still another embodiment, at least one surface of the primary layer is substantially fully coated with the secondary layer of a mixture of the geometrically symmetrically shaped friction modifying and irregularly shaped friction modifying particles. The primary layer material, with the mixture of friction modifying particles coated thereon, is then impregnated with at least one type of suitable resin. The impregnated, coated material is cured at a predetermined temperature for a predetermined period of time to form the friction material.

Various methods for impregnating the friction materials of the present invention can be used. The coated material is impregnated with the phenolic or phenolic based resin, preferably so that the impregnating resin material comprises about 40 to about 120 parts, by weight, per 100 parts, by weight, of the friction material. After the coated material has been impregnated with the resin, the impregnated coated material is heated to a desired temperature for a predetermined length of time to form the friction material. The heating cures the phenolic resin at a temperature of about 300°F. When other resins are present, such as a silicone resin, the heating cures the silicone resin at a temperature of about 400°F. Thereafter, the impregnated and cured friction material is adhered to the desired substrate by suitable means.

There is good particle adhesive due to the embedded fiber yarns in the deposit layer of friction modifying material. In the embodiments with full coverage of the material, the surface of the friction material becomes very smooth which affects the coefficient of friction-slip speed performance. Various resins useful in impregnating the fibrous base material include phenolic resins and phenolic-based resins. It is to be understood that various phenolic-based resins which include in the resin blend other modifying ingredients, such as epoxy, butadiene, silicone, tung oil, benzene, cashew nut oil and the like, are contemplated as being useful with the present invention. In the phenolic-modified resins, the phenolic resin is generally present at about 50% or greater by weight (excluding any solvents present) of the resin blend. However, it has been found that friction materials, in certain embodiments, can be improved when the impregnant resin blend contains about 5 to about 80%, by weight, and for certain purposes, about 15 to about 55%, and in certain embodiments about 15 to about 25%, by weight, of silicone resin based on the weight of the silicone-phenolic mixture (excluding solvents and other processing acids).

Examples of useful phenolic and phenolic-silicone resins useful in the present invention are disclosed in the above-referenced BorgWamer U.S. patents which are fully incorporated herein, by reference. Silicone resins useful in the present invention include, for example, thermal curing silicone sealants and silicone rubbers. Various silicone resins are useful with the present invention. One resin, in particular, comprises xylene and acetylacetone (2,4-pentanedione). The silicone resin has a boiling point of about 362°F (183°C), vapor pressure at 68°F mm, Hg: 21, vapor density (air=1) of 4.8, n°egligible solubility in water, specific gravity of about 1.09, percent volatile, by weight, 5% evaporation rate (ether=1 ), less than 0.1, flash point about 149°F (65°C) using the Pensky-Martens method. It is to be understood that other silicone resins can be utilized with the present invention. Other useful resin blends include, for example, a suitable phenolic resin comprises (% by wt.): about 55 to about 60% phenolic resin; about 20 to about 25% ethyl alcohol; about 10 to about 14% phenol; about 3 to about 4% methyl alcohol; about 0.3 to about 0.8% formaldehyde; and, about 10 to about 20% water. Another suitable phenolic-based resin comprises (% by wt.): about 50 to about 55% phenol/formaldehyde resin; about 0.5% formaldehyde; about 11 % phenol; about 30 to about 35% isopropanol; and, about 1 to about 5% water.

It has also been found that another useful resin is an epoxy modified phenolic resin which contains about 5 to about 25 percent, by weight, and preferably about 10 to about 15 percent, by weight, of an epoxy compound with the remainder (excluding solvents and other processing aids) phenolic resin. The epoxy-phenolic resin compound provides, in certain embodiments, higher heat resistance to the friction material than the phenolic resin alone.

In certain embodiments, it is preferred that the target pick up of resin by the coated material range from about 40 to about 120%, and, in certain embodiments, about 60 to at least 80%, by weight, total silicone-phenolic resin. After the coated material is impregnated with the resin, the coated material is cured for a period of time (in certain embodiments for about 1/2 hour) at temperatures ranging between 300-400°C to cure the resin binder and form the friction material. The final thickness of the friction material depends on the initial thickness of the coated material and, in certain embodiments, preferably ranges from about 0.014" to about 0.040".

It further contemplated that other ingredients and processing aids known to be useful in both preparing resin blends and in preparing impregnating coated materials can be included in the friction materials.

Both the silicone resin and the phenolic resin are present in solvents which are compatible to each other. These resins are mixed together (in preferred embodiments) to form a homogeneous blend and then used to impregnate the coated material. There is not the same effect if the coated material is impregnated with a phenolic resin and then a silicone resin is added thereafter or vice versa. There is also a difference between a mixture of a silicone-phenolic resin solution, and emulsions of silicone resin powder and/or phenolic resin powder. When silicone resins and phenolic resins are in solution they are not cured at all. In contrast, the powder particles of silicone resins and phenolic resins are partially cured. The partial cure of the silicone resins and the phenolic resins inhibits a good impregnation of the coated material.

In certain embodiments of the present invention, the coated material is impregnated with a blend of a silicone resin in a solvent which is compatible with the phenolic resin and its solvent. In one embodiment, isopropanol has been found to be an especially suitable solvent. It is to be understood, however, that various other suitable solvents, such as ethanol, methyl-ethyl ketone, butanol, isopropanol, toluene and the like, can be utilized in the practice of this invention. The presence of a silicone resin, when blended with a phenolic resin and used to impregnate the coated material, causes the resulting friction materials to be more elastic than coated materials impregnated only with a phenolic resin. When pressures are applied to the silicone-phenolic resin blended impregnated friction material of the present invention, there is a more even distribution of pressure which, in turn, reduces the likelihood of uneven lining wear. After the silicone resin and phenolic resin are mixed together, the mixture is used to impregnate the coated material.

In certain aspects the present invention thus also relates to a process for producing a friction material comprising: forming a primary layer material, coating about 3% to about 100% of at least one surface of the primary layer material with friction modifying particles, the friction modifying particles being present at about 0.2 to about 80%, by weight, based on the weight of the primary layer material, and impregnating the coated material with a resin, and thereafter curing the impregnated material at a predetermined temperature for a predetermined period of time.

It has been found that the secondary layer of friction modifying particles on the primary layer provides a friction material with good anti-shudder characteristics, high durability, good wear resistance and improved break-in characteristics.

The following examples provide further evidence that the friction modifying particles coated material and the resulting friction material of the present invention are an improvement over conventional friction materials and have satisfactory characteristics with respect to certain paper type fibrous base friction materials. Various preferred embodiments of the invention are described in the following examples, which however, are not intended to limit the scope of the invention.

### Examples

Slip Clutch Interface Technology Requirements: The friction materials of the present invention are designed for slipping clutch applications that meet special requirements. These requirements include high mechanical strength, heat resistance, durability, stability and shudder resistance. The friction material of the present invention has high porosity, a unique material structure for high mechanical strength, high temperature conductivity, and anti-shudder friction modifier characteristics. These material characteristics are the necessary conditions of smooth slip torque output and long term friction stability.

The slip clutch material requirements for desirable slip torque response and long-term durability include good curve shape and long term friction stability. The good curve shape is dependent on high material porosity and high friction modifier content. The long term friction stability is dependent on high porosity (anti-glazing) and high temperature ingredients.

The following examples provide further evidence that the friction modifying particle coated fibrous base material and the resulting friction material of the present invention are an improvement over conventional friction materials. Various preferred embodiments of the invention are described in the following examples, which however, are not intended to limit the scope of the invention.

### Example I

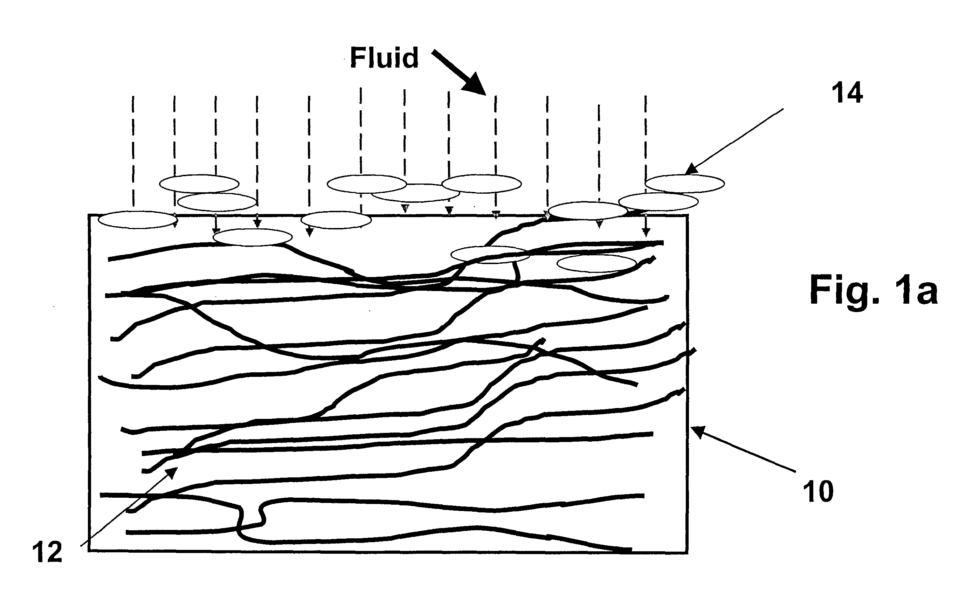

Fig 1a is a schematic illustration of a porous woven material having a layer of symmetrical shaped friction modifying material at least partially covering the surface of the porous woven material.

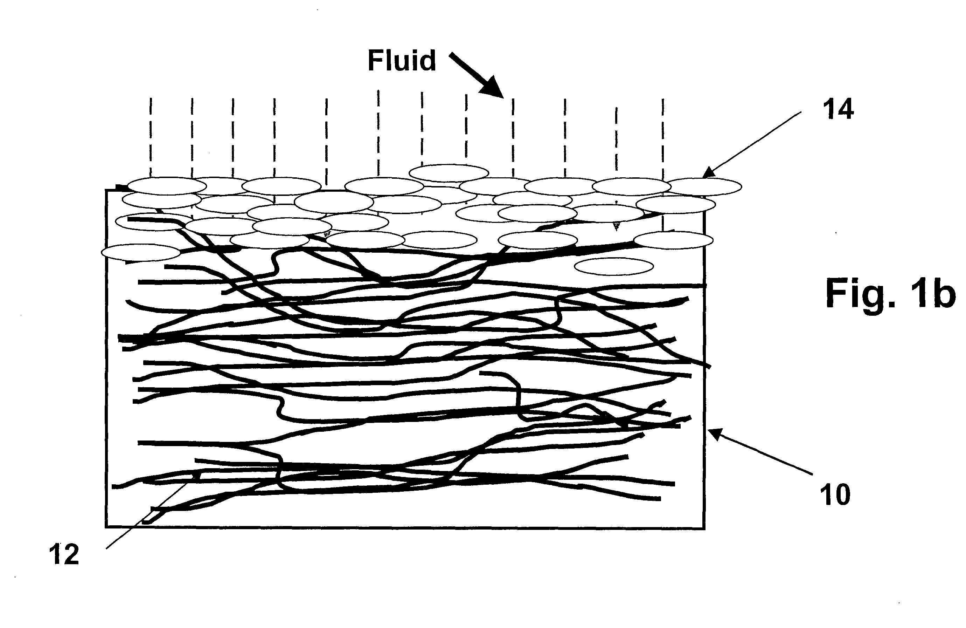

Fig 1b is a schematic illustration of a porous woven material having a layer of symmetrical shaped friction modifying material fully covering the surface of the porous woven material.

### Example II

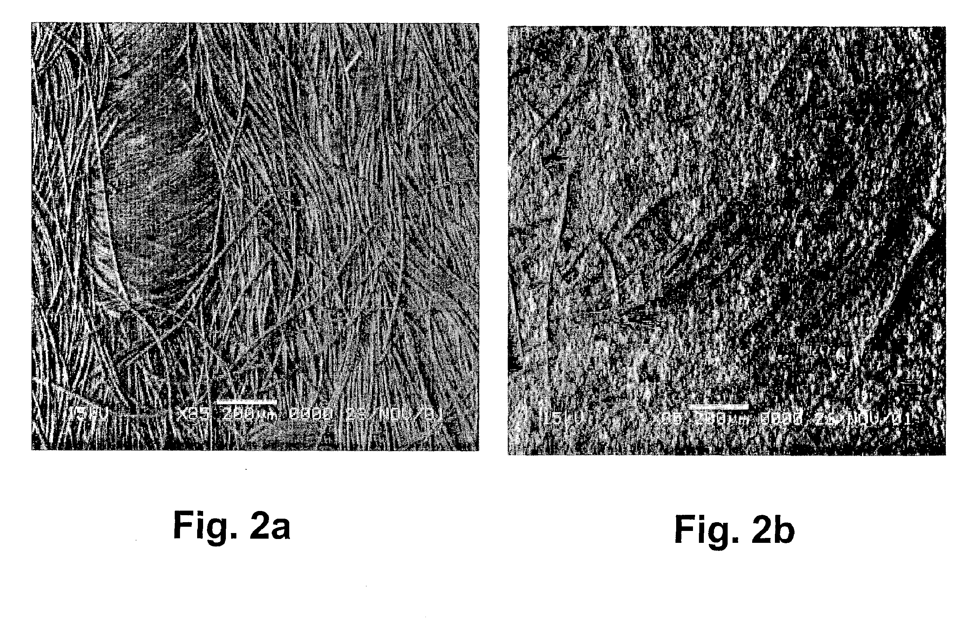

Fig 2a is a scanning electron microphotograph showing an uncoated porous woven material.

Fig 2b is a scanning electron microphotograph showing a porous woven material partially coated with symmetrically shaped friction modifying particles.

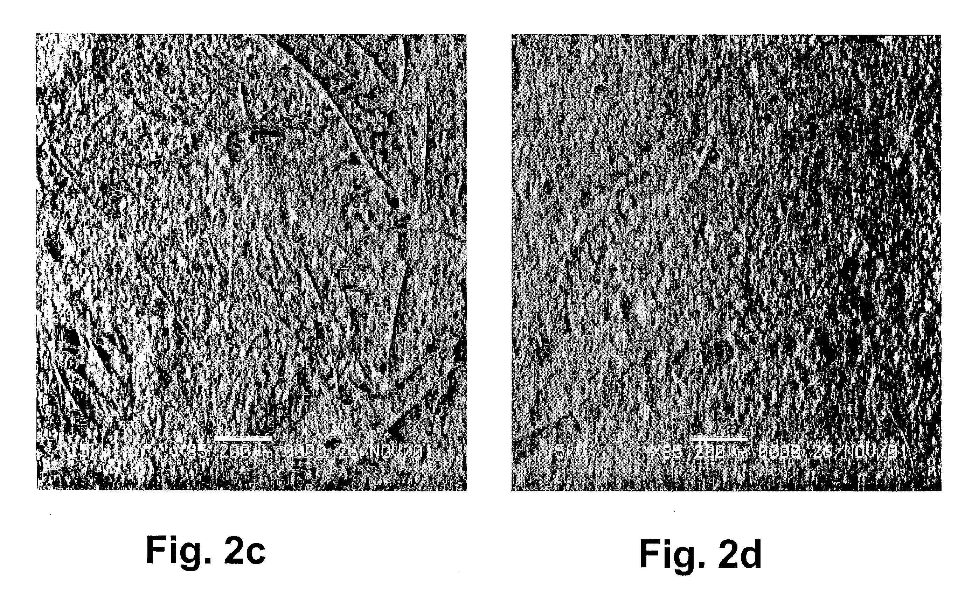

Fig 2c is a scanning electron microphotograph showing a porous woven material partially coated with symmetrically shaped friction modifying particles.

Fig 2d is a scanning electron microphotograph showing a porous woven material coated with symmetrically shaped friction modifying particles.

These SEMs show how the some of the friction modifying material penetrates into the warp and weft of the woven material while other of the friction modifying material remains on the surface of the woven material, thus giving the friction material its very desirable anti-shudder characteristics. Also these SEMs also show the high porosity of the friction material.

### Example III

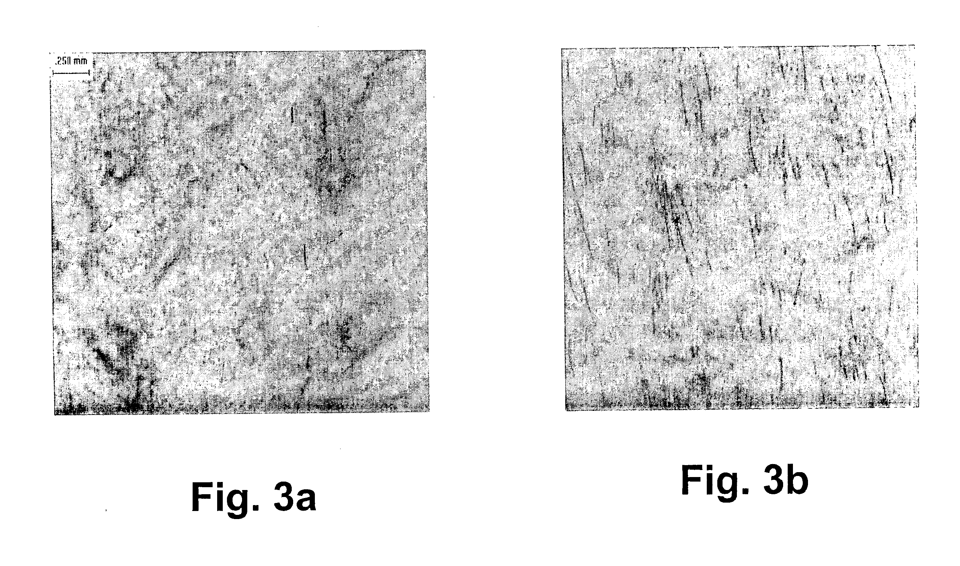

Fig 3a is a photograph showing a porous woven material coated with symmetrically shaped friction modifying particles and saturated with about 36% resin pick up.

Fig 3b is a photograph showing a porous woven material coated with a mixture of symmetrically shaped friction modifying particles and irregularly shaped friction modifying particles and saturated with about 36% resin pick up. The friction modifying materials are embedded in the fiber yarns, thus allowing for good adhesion of the friction modifying particles to the woven material. The coated woven material structure contains a porous and high temperature synthetic fiber network to provide high heat dissipation and friction stability. Friction modifying particles are deposited on the woven material to provide the "anti-shudder" properties.

### Example IV

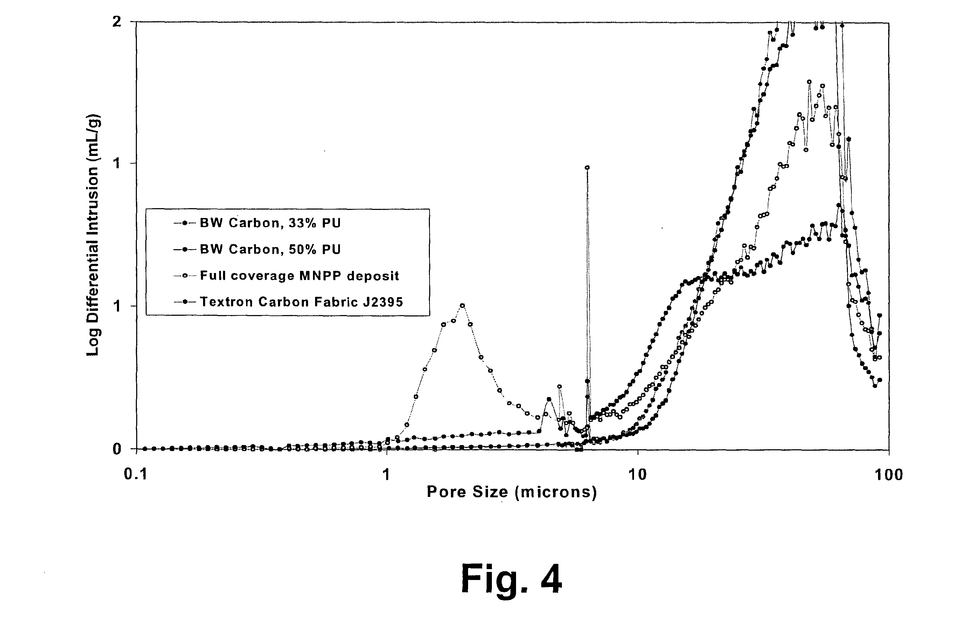

Fig. 4 is a graph showing pore size and porosity data for a Comparative example A with 33% resin pick up, a Comparative example B with a 50 % resin pick up, Example 1 with full coverage with symmetrical shaped friction modifying particles, and a Comparative example C, a woven fabric.

### Example V

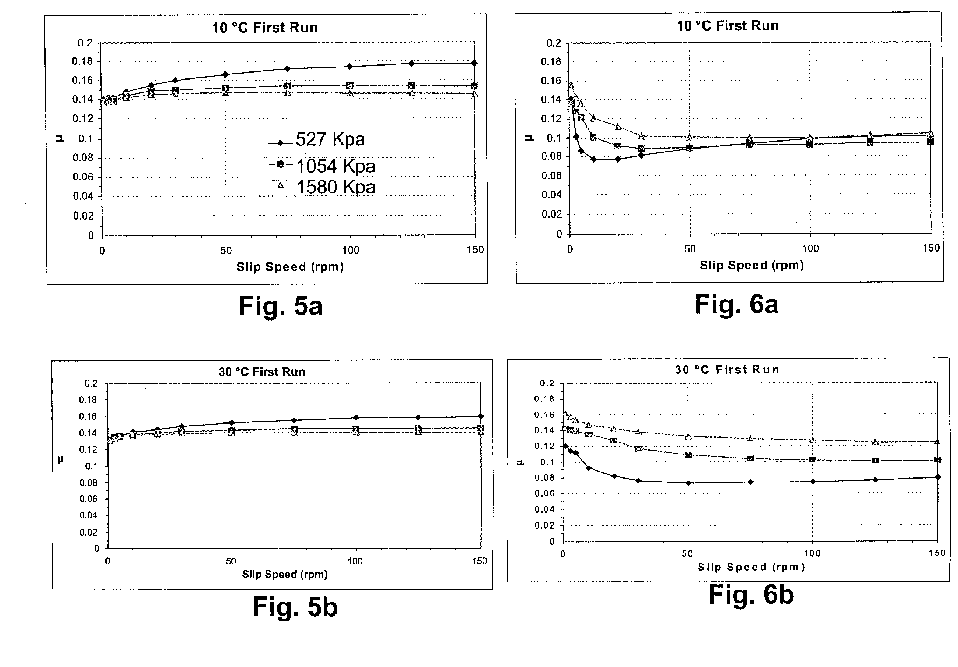

The coefficient of friction and slip speed were measured. Fig. 5a is a graph showing the µ-slip speed for Comparative material A at 10 °C, first run with a resin saturation of 36% pick up. Fig. 5b is a graph showing the µ-slip speed for Comparative material A at 20 °C, first run with a resin saturation of 36% pick up.

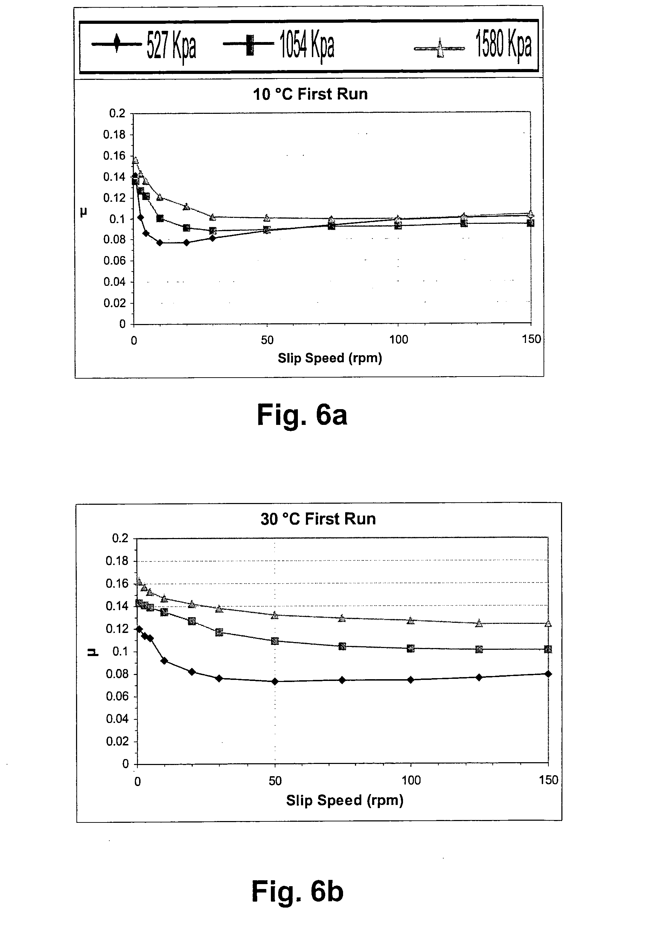

Fig. 6a is a graph showing the µ-slip speed for Example 3 having a coating of a mixture of symmetrical shaped friction modifying particles and irregularly shaped friction modifying particles on a woven material at 10 °C, first run with a resin saturation of 36% pick up.

Fig. 6b is a graph showing the µ-slip speed for Example 3 having a coating of a mixture of symmetrical shaped friction modifying particles and irregularly shaped friction modifying particles on a woven material at 30 °C, first run with a resin saturation of 36% pick up.

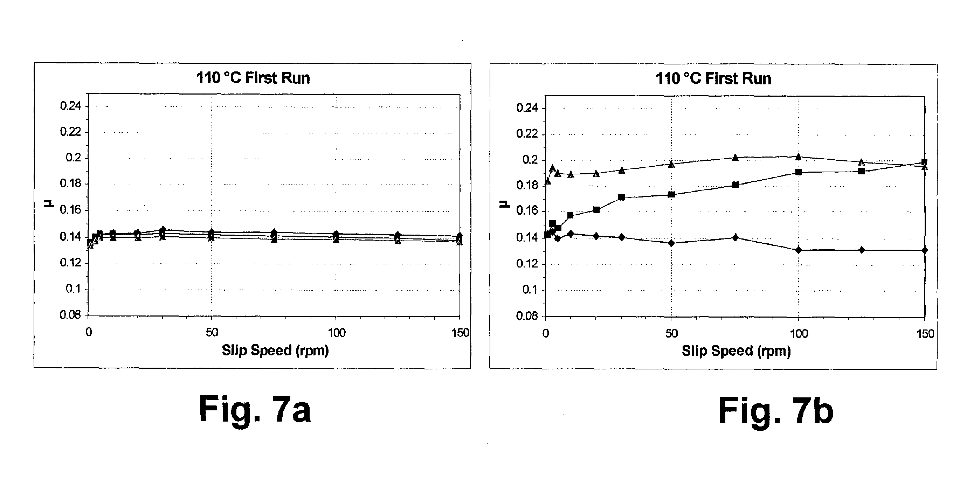

Fig. 7a is a graph showing the µ- slip speed for Comparative material A at 110 °C, first run with a resin saturation of 36% pick up.

Fig. 7b is a graph showing the µ-slip speed for Example 3 having a full coating of a mixture of symmetrical shaped friction modifying particles and irregularly shaped friction modifying particles on a woven material at 110 °C, first run with a resin saturation of 36% pick up.

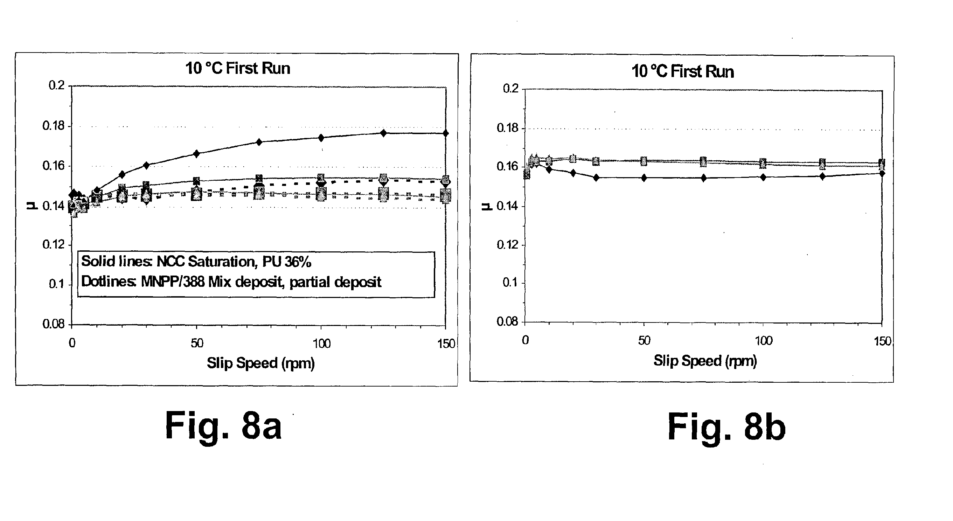

Fig. 8a is a graph showing the µ-slip speed for: solid lines - Comparative material A at 10 °C, first run with a resin saturation of 36% pick up; dotted lines - Example 2 having a partial coating of a mixture of symmetrical shaped friction modifying particles and irregularly shaped friction modifying particles on a woven material at 10 °C, first run with a resin saturation of 36% pick up.

Fig. 8b is a graph showing the µ-slip speed for Example 2 having a partial coating of a mixture of symmetrical shaped friction modifying particles and irregularly shaped friction modifying particles on a woven material at 10 °C, first run with a resin saturation of 36% pick up.

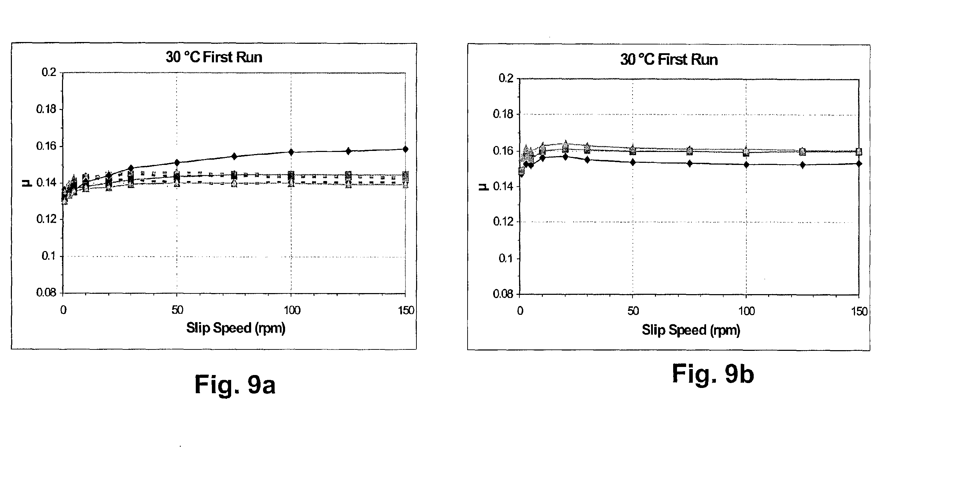

Fig. 9a is a graph showing the µ-slip speed for: solid lines - Comparative material A at 30 °C, first run with a resin saturation of 36% pick up; dotted lines - Example 2 having a partial coating of a mixture of symmetrical shaped friction modifying particles and irregularly shaped friction modifying particles on a woven material at 30 °C, first run with a resin saturation of 36% pick up.

Fig. 9b is a graph showing the µ-slip speed for Example 2 having a partial coating of a mixture of symmetrical shaped friction modifying particles and irregularly shaped friction modifying particles on a woven material at 30 °C, first run with a resin saturation of 36% pick up.

Fig. 10a is a graph showing the µ-slip speed for: solid lines - Comparative material A at 110 °C, first run with a resin saturation of 36% pick up; dotted lines - Example 2 having a partial coating of a mixture of symmetrical shaped friction modifying particles and irregularly shaped friction modifying particles on a woven material at 110 °C, first run with a resin saturation of 36% pick up.

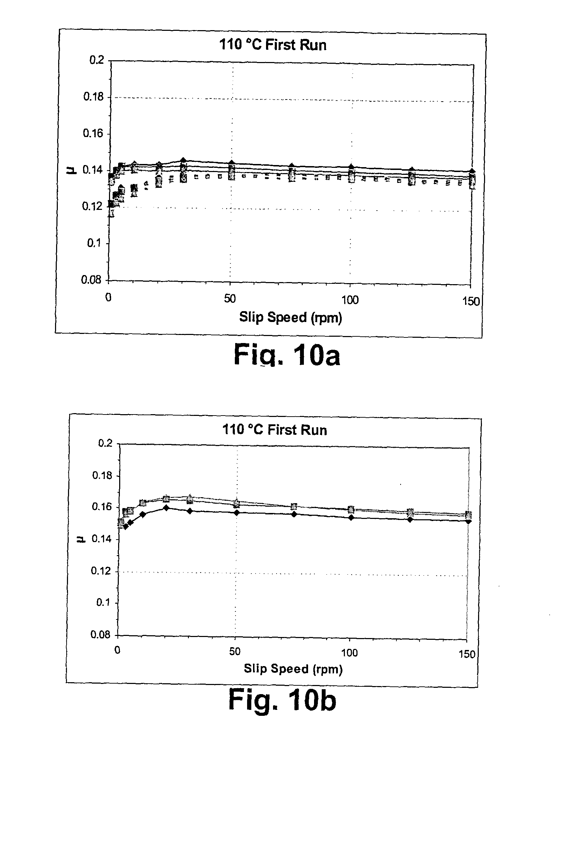

Fig. 10b is a graph showing the µ-slip speed for Example 2 having a partial coating of a mixture of symmetrical shaped friction modifying particles and irregularly shaped friction modifying particles on a woven material at 110 °C, first run with a resin saturation of 36% pick up.

### Example VI

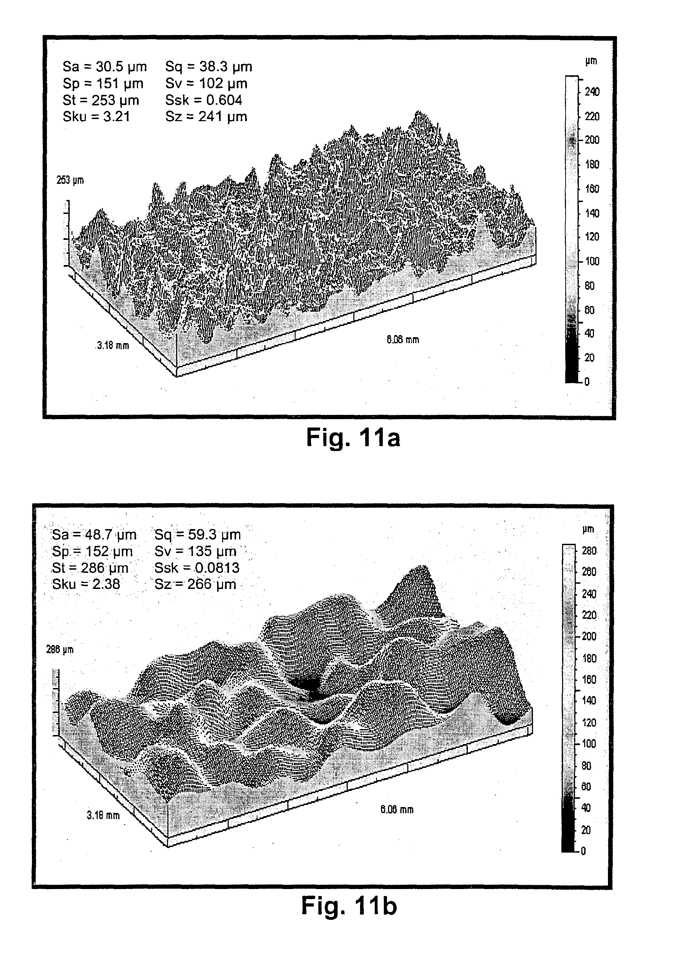

Figs. 11 a and 11b are illustrations of the surface roughness of Example 1 with a full coverage of symmetrically shaped friction modifying particles.

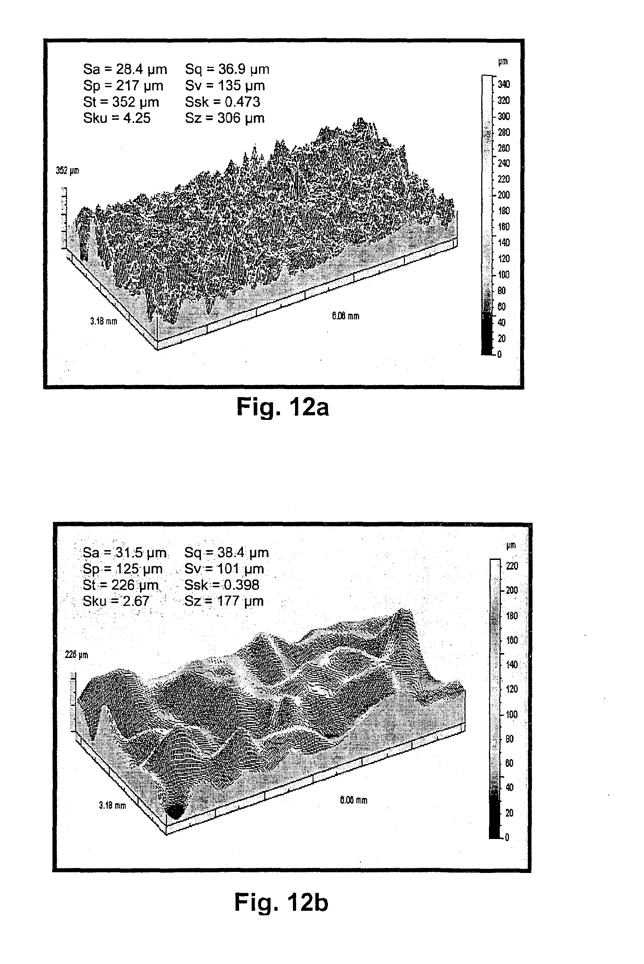

Figs. 12a and 12b are illustrations of the surface roughness of Example 1 with partial coverage of symmetrically shaped friction modifying particles.

### INDUSTRIAL APPLICABILITY

The present invention is useful as a high energy friction material for use with clutch plates, transmission bands, brake shoes, synchronizer rings, friction disks or system plates.

The above descriptions of the preferred and alternative embodiments of the present invention are intended to be illustrative and are not intended to be limiting upon the scope and content of the following claims.

## Claims

1. A friction material comprising a base material impregnated with at least one curable resin, the base material comprising i) a porous primary layer comprising a first material, preferably a fibrous base material, and ii) a secondary layer comprising geometrically symmetrically shaped friction modifying particles at least partially covering an outer surface of the material; the material primary layer holding the geometrically symmetrically shaped friction modifying particles on the surface of the primary material layer.

2. The friction material of claim 1, wherein the primary layer material comprises fabric materials, woven and/or nonwoven materials.

3. The friction material of claim 2, wherein the primary layer material has a surface smoothness in the range of 0.02 mm Ra to about 0.2 mm which smooth surface provides the friction material with consistent anti-shudder and coefficient of friction characteristics.

4. The friction material of claim 1, wherein the friction modifying particles comprise symmetrically shaped silica particles or symmetrically shaped celite particles.

5. The friction material of claim 1, wherein the friction modifying particles comprise a mixture of carbon particles and symmetrically shaped silica particles, the friction modifying particles being present at about 0.2 to about 80%, by weight, based on the weight of the primary layer material.

6. The friction material of claim 1, wherein the friction modifying particles cover about 3% to about 90% of the surface area of the primary layer material.

7. The friction material of claim 1, wherein the friction modifying particles substantially cover the surface area of the primary layer material.

8. The friction material of claim 1, wherein the friction modifying particles comprise a mixture of symmetrically shaped diatomaceous earth particles and fully carbonized carbon particles or partially carbonized particles, and mixtures thereof.

9. The friction material of claim 1, wherein the friction modifying particles comprises about 0.2% to about 50%, by weight, of friction modifying particles, based on the weight of the primary layer material.

10. The friction material of claim 5, wherein the friction modifying particles comprises about 20% to about 35%, by weight, of symmetrically shaped silica particles, and about 65% to about 80% carbon particles, based on the total weight of the friction modifying particles.

11. The friction material of claim 1, wherein the friction modifying particle size ranges from about 0.5 to about 20 microns.

12. The friction material of claim 1, wherein the friction modifying particles comprises symmetrically shaped diatomaceous earth.

13. The friction material of claim 1, impregnated with a phenolic resin or a modified phenolic resin.

14. The friction material of claim 13, wherein the friction material comprises about 40 to about 120% resin, by weight.

15. The friction material of claim 1, impregnated with a mixture of a phenolic resin and a silicone resin wherein the amount of silicone resin in the mixture ranges from approximately 5 to approximately 80%, by weight, based on the weight of the mixture, and optionally, wherein the phenolic resin is present in a solvent material and the silicone resin is present in a solvent material which is compatible with the solvent material of the phenolic resin.

16. The friction material of claim 13, wherein the modified phenolic resin comprises an epoxy phenolic resin.

17. A process for producing a friction material comprising:
forming a primary layer material,
coating about 3% to about 100% of at least one surface of the primary layer material with at least symmetrically shaped friction modifying particles, the symmetrically shaped friction modifying particles being present at about 0.2 to about 62%, by weight, based on the weight of the primary layer material, and
impregnating the coated material with a phenolic resin, or phenolic-based resin mixture, and thereafter curing the impregnated material at a predetermined temperature for a predetermined period of time.

18. A process for producing a friction material comprising:
pre-saturating a primary layer material with a resin,
drying and curing the resin; and
subsequently coating the saturated and cured primary layer material with a mixture of phenolic resin and symmetrically shaped particles.

19. A process for producing a friction material comprising:
substantially fully coating at least one surface of a primary layer material with a secondary layer of geometrically symmetrically shaped friction modifying particles,
impregnating with at least one type of resin, and
curing at a predetermined temperature for a predetermined period of time to form the friction material.

20. A process for producing a friction material comprising:
at least partially coating at least one surface of a primary layer with a secondary layer comprising of a mixture of geometrically symmetrically shaped friction modifying and irregularly shaped friction modifying particles,
impregnating with at least one type of resin, and
curing at a predetermined temperature for a predetermined period of time to form the friction material.

21. A process for producing a friction material comprising:
substantially fully coating at least one surface of primary layer with a secondary layer of a mixture of the geometrically symmetrically shaped friction modifying and irregularly shaped friction modifying particles,
impregnating with at least one type of resin, and
curing at a predetermined temperature for a predetermined period of time to form the friction material.

22. The process according to any of claims 17 to 21, wherein the friction modifying particles comprise a mixture of carbon particles and symmetrically shaped silica particles.
